# EUROPEAN PATENT SPECIFICATION

(11) **EP 2 624 381 B1**
(45) Date of publication and mention of the grant of the patent: **26.12.2018**
(21) Application number: 13152667.5
(22) Date of filing: 25.01.2013
(51) Int. Cl.: H01S 3/139

(54) **Method for determining saturated absorption lines and laser frequency stabilizing device**
Verfahren zur Bestimmung gesättigter Absorptionslinien und Laserfrequenzstabilisierungsvorrichtung
Procédé pour la détermination des lignes d'absorption saturée et dispositif stabilisateur de fréquence laser

(30) Priority: 25.01.2012 JP 2012013138
(43) Date of publication of application: 07.08.2013
(73) Proprietor: Mitutoyo Corporation, Kawasaki-shi, Kanagawa 213-8533 (JP)
(72) Inventor: Yano, Ryunosuke, Kanagawa 213-8533 (JP); Oozeki, Hidekazu, Ibakagki 305-0854 (JP)
(74) Representative: Gill Jennings & Every LLP

(56) References cited:
- EP-A1- 1 930 998
- EP-A1- 2 101 378
- JP-A- 2001 274 495
- US-A- 5 450 207

## Description

### BACKGROUND OF THE INVENTION

### 1. Field of the Invention

The present invention relates to a method for determining saturated absorption lines and to a laser frequency stabilizing device.

### 2. Description of Related Art

Conventionally, a laser frequency stabilizing device is known in which a resonator length is changed and an oscillation frequency of laser light is stabilized to a specific saturated absorption line based on a saturated absorption line in a light output signal obtained by shining laser light on an absorption cell (see, e.g., Japanese Patent Laid-open Publication No. 2008-141054).

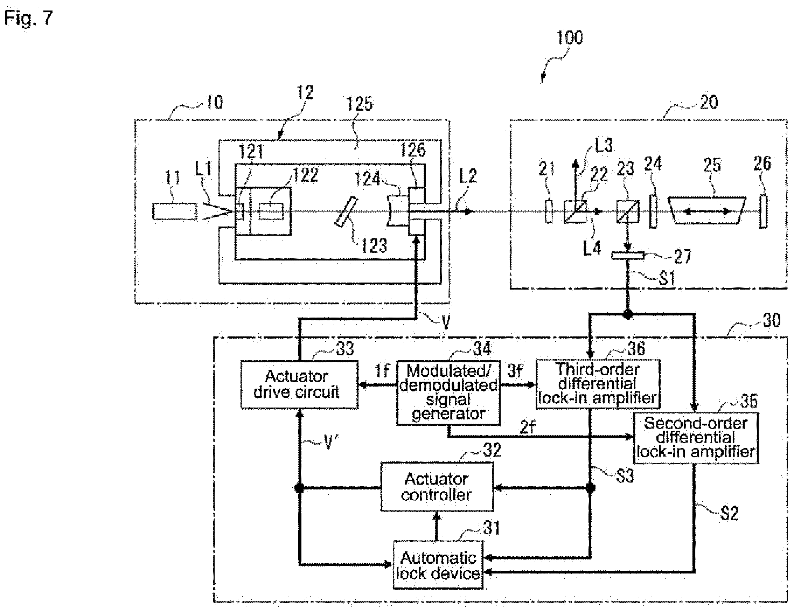

Fig. 7 is a block diagram illustrating a conventional laser frequency stabilizing device 100. As shown in Fig. 7, the laser frequency stabilizing device 100 includes a laser generator 10, a laser light detector 20, and a drive controller 30. The laser generator 10 includes an excitation semiconductor laser 11 emitting laser light L1 at a wavelength of 808 nm and a resonance wave generator 12 to which the laser light L1 is input. The resonance wave generator 12 outputs laser light L2 at a wavelength of 532 nm. The resonance wave generator 12 has a configuration in which optical elements are accommodated within a resonator housing 125. The optical elements include an Nd:YVO4 crystal 121 emitting light at a wavelength of 1064 nm due to stimulated emission; a KTP crystal (non-linear optical crystal) 122 converting a portion of the light having a wavelength of 1064 nm into light having a wavelength of 532 nm; an etalon 123 transparent only to a specific frequency of laser light; and a reflecting mirror 124 reflecting light having a wavelength of 1064 nm and transparent to light having a wavelength of 532 nm. In addition, by providing the etalon 123 within the resonator housing 125, the single mode laser light L2 can be obtained. An actuator 126 is also provided within the resonator housing 125, the actuator 126 being a piezo element or the like that changes a position of the reflecting mirror 124 (changes a resonator length) due to applied voltage.

After the laser light L2 passes through a half-wave plate 21, the laser light detector 20 separates the laser light L2 into a laser light L3 and a laser light L4 with a first polarizing beam splitter 22. The laser light L3 is used in length measurement and the like. The laser light L4 is used in a saturated absorption line search process (hereafter, search process) and a laser light oscillation frequency locking process (hereafter, frequency locking process), which are described hereafter. The laser light L4 then passes through a second polarizing beam splitter 23, a quarter-wave plate 24, and an iodine cell (absorption cell) 25 before the laser light detector 20 reflects the laser light L4 back toward the iodine cell 25 with a reflecting mirror 26. Then, after the laser light L4 has once again transited the iodine cell 25 and the quarter-wave plate 24, the laser light detector 20 reflects the laser light L4 off the second polarizing beam splitter 23 toward a light detector 27 (used as a conversion device). The laser light detector 20 then outputs a light output signal S1 by performing photoelectric conversion of the laser light L4 with the light detector 27.

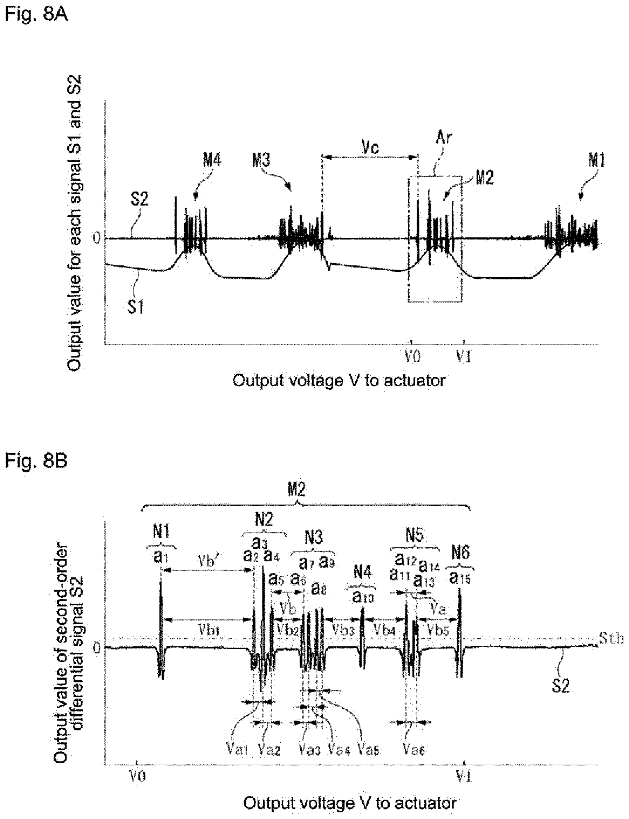

Figs. 8A and 8B are views illustrating the light output signal S1 and a second-order differential signal S2. Moreover, Fig. 8A is a view illustrating waveforms for each of the signals S 1 and S2 when an output voltage V is changed (a case where the resonator length is changed), where an output value for each of the signals S1 and S2 is a vertical axis and the output voltage V to the actuator 126 is a horizontal axis. Fig. 8B is an enlarged view of the second-order differential signal S2 in an area Ar in Fig. 8A. As shown in Fig. 8A, when the output voltage V is scanned over a broad range, absorption lines M1 to M4 (hereafter, referred to as peak groups M1 to M4 for ease of explanation) are observed to repeat periodically. Peak group M1 and peak group M3 are identical peak groups, and peak group M2 and peak group M4 are identical peak groups. Herein, the peak groups M1 to M4 are bundled saturated absorption line groups. For example, as shown in Fig. 8B, the peak group M2 is configured by, in order from the lowest output voltage V: a saturated absorption line group N1 (a saturated absorption line a1), a saturated absorption line group N2 (saturated absorption lines a2 to a5), a saturated absorption line group N3 (saturated absorption lines a6 to a9), a saturated absorption line group N4 (a saturated absorption line a10), a saturated absorption line group N5 (saturated absorption lines a11 to a14), and a saturated absorption line group N6 (a saturated absorption line a15).

Based on the light output signal S1, the drive controller 30 controls an operation of the actuator 126 (adjusts the resonator length) and stabilizes the oscillation frequency to a specific saturated absorption line. Specifically, an actuator controller 32 in the drive controller 30 controls an actuator drive circuit 33 (adjusts a voltage value V' output to the actuator drive circuit 33) with a control signal from an automatic lock device 31, thereby changing the output voltage V to the actuator 126. Moreover, in addition to the structures 31 to 33 described above, the drive controller 30 includes a modulated/demodulated signal generator 34, a second-order differential lock-in amplifier 35, and a third-order differential lock-in amplifier 36. The modulated/demodulated signal generator 34 outputs signals having frequencies of If, 2f, and 3f Hz. The light output signal S1 is obtained by excitation of the laser light L2, which is modulated by the actuator drive circuit 33 based on a signal having the 1f Hz frequency. The second-order differential lock-in amplifier 35 and the third-order differential lock-in amplifier 36, as generating devices, modulate the light output signal S1 to the 2f and 3f Hz frequencies, respectively, then output a second-order differential signal S2 and a third-order differential signal S3, respectively.

The automatic lock device 31 measures the saturated absorption lines once in the search process (measures the number of saturated absorption line groups belonging to each of the peak groups M1 to M4 and the number of saturated absorption lines belonging to each of the saturated absorption line groups). Then, in the frequency locking process, the automatic lock device 31 measures the saturated absorption lines once again and locks the oscillation frequency to the desired saturated absorption line. Moreover, in a case where the output value of the second-order differential signal S2 is equal to or greater than a predetermined voltage value Sth (Fig. 8B) while changing the output voltage V in the search process and the frequency locking process, the automatic lock device 31 identifies the signal as the saturated absorption line.

In some cases, noise is superimposed on the second-order differential signal S2, and the output value of the second-order differential signal S2 becomes equal to or greater than the predetermined voltage value Sth due to an influence of the noise. The laser frequency stabilizing device 100 recited in Japanese Patent Laid-open Publication No. 2008-141054 is not configured to include determining whether noise is superimposed on the second-order differential signal S2. Therefore, even in a case where the output value of the second-order differential signal S2 is equal to or greater than the voltage value Sth due to the influence of the noise, the signal may be identified as the saturated absorption line and favorable identification of the saturated absorption line may be difficult.

### SUMMARY OF THE INVENTION

The present invention provides a method for determining saturated absorption lines capable of determining whether noise is superimposed on the second-order differential signal and of favorably identifying saturated absorption lines. The present invention also provides a laser frequency stabilizing device.

The method for determining saturated absorption lines of the present invention is a method for determining saturated absorption lines for a laser frequency stabilizing device in which a resonator length is changed and an oscillation frequency of laser light is stabilized to a specific saturated absorption line based on a saturated absorption line in a light output signal obtained by shining laser light on an absorption cell. The method for determining saturated absorption lines includes threshold value definition, waveform determination, and absorption line determination. In the threshold value definition, a first threshold value and a second threshold value are defined based on an output value of the light output signal. The first threshold value and the second threshold value are in a magnitude relationship. In the waveform determination, an output value of a second-order differential signal of the light output signal is compared with the first threshold value and the second threshold value. Then, a determination is made as to whether the second-order differential signal following a change in the resonator length has an output waveform that displays a behavior in which the output waveform changes from less than the second threshold value to be equal to or greater than the first threshold value, and then changes to be less than the second threshold value. In the absorption line determination, based on a result of the determination by the waveform determination, a determination is made as to whether the output waveform of the second-order differential signal is the saturated absorption line.

A signal recognized as the saturated absorption line occurs when the second-order differential signal S2 following a change in the resonator length has the output waveform that displays the following behavior. Specifically, the output waveform of the second-order differential signal S2 displays a behavior (hereafter, a first behavior) in which the output waveform changes from less than a smaller of two threshold values in a magnitude relationship (corresponding to the second threshold value above) to be equal to or greater than a larger of the two threshold values (corresponding to the first threshold value above), and then changes to be less than the smaller of the two threshold values. Meanwhile, in a case where noise is superimposed on the second-order differential signal, the first behavior is not displayed.

In the method for determining saturated absorption lines of the present invention, the saturated absorption lines are identified as illustrated below, with a focus on the above points. Specifically, when the resonator length is changed, a determination is made as to whether the output waveform of the second-order differential signal displays the first behavior (waveform determination). In addition, when the output waveform of the second-order differential signal displays the first behavior, the output waveform is identified as the saturated absorption line (absorption line determination). Meanwhile, when the output waveform of the second-order differential signal does not display the first behavior, e.g., when a peak value in the output waveform is equal to or greater than the first threshold value but the output waveform does not display the first behavior, the output waveform is not identified as the saturated absorption line, but rather as noise superimposed on the second-order differential signal (absorption line determination). As described above, with the method for determining saturated absorption lines of the present invention, a determination can be made as to whether noise is superimposed on the second-order differential signal and saturated absorption lines can be favorably identified.

For example, when the laser frequency stabilizing device is used for an extended period of time and laser power of the laser light emitted from the excitation semiconductor laser decreases, the output value (absolute value) of the light output signal output from the light detector also decreases. When the output value (absolute value) of the light output signal decreases, the output value (absolute value) of the second-order differential signal also decreases in response to a change in the output value (absolute value) of the light output signal. In addition, for example, when the first and second threshold values are defined to be uniform regardless of changes in the laser power, the following circumstance may occur. First, the output waveform of the second-order differential signal identified as the saturated absorption line (the output waveform displaying the first behavior) is postulated. For a case where the desired laser power is achieved, the output waveform is identified as the saturated absorption line using the waveform determination and the absorption line determination described above. Then, because the output value (absolute value) of the second-order differential signal also decreases when the laser power decreases below the desired laser power, the peak values (peak values in a positive direction) and valley values (peak values in a negative direction) in the postulated output waveform of the second-order differential signal may be values in a range equal to or greater than the second threshold value and less than the first threshold value. In other words, the postulated output waveform of the second-order differential signal will not display the first behavior and the output waveform will not be identified as the saturated absorption line, but rather as noise superimposed on the second-order differential signal, regardless of whether the output waveform is the saturated absorption line.

In the present invention, the method for determining saturated absorption lines includes the threshold value definition, in which the first and second threshold values are defined based on the output value of the light output signal. Therefore, the appropriate first and second threshold values can be defined by the threshold value definition based on the output value of the light output signal (i.e., based on changes in the laser power corresponding to use of the laser frequency stabilizing device). Accordingly, by using the first and second threshold values defined in the threshold value definition, the saturated absorption line can be appropriately identified in the waveform determination.

In the method for determining saturated absorption lines of the present invention, the threshold value definition preferably defines the absolute value for at least one of the first and second threshold values to be lower as the absolute value for the output value of the light output signal decreases. In the present invention, the threshold value definition defines the absolute value for at least one of the first and second threshold values as described above. Thereby, because the output value (absolute value) of the second-order differential signal also decreases when the output value (absolute value) of the light output signal decreases, the first and second threshold values are defined in the threshold value definition as described above. As a result, the postulated output waveform of the second-order differential signal reliably displays the first behavior. Accordingly, by using the first and second threshold values defined in the threshold value definition, the saturated absorption line can be more appropriately identified in the waveform determination.

In the method for determining saturated absorption lines of the present invention, the threshold value definition preferably defines at least one of the first and second threshold values to be a different threshold value for each saturated absorption line that is a determination target. When the saturated absorption lines are dissimilar, the peak values and valley values in the output waveform of the second-order differential signal are also dissimilar (see Fig. 8B). In addition, for example, when the first and second threshold values are defined to be uniform for all saturated absorption lines, the following circumstance may occur. For example, the peak value and the valley value of the saturated absorption line a1 (see Fig. 8B) have comparatively large absolute values. The peak value and the valley value of the saturated absorption line a6 have comparatively small absolute values. When determining the saturated absorption line a6 in a case where comparatively large (having large absolute values) first and second threshold values are defined based on the saturated absorption line a1, the peak value and valley value in the output waveform of the second-order differential signal at the saturated absorption line a6 may be values within a range equal to or greater than the second threshold value and less than the first threshold value. In other words, the output waveform of the second-order differential signal at the saturated absorption line a6 does not display the first behavior and the output waveform is not identified as the saturated absorption line, but rather as noise superimposed on the second-order differential signal regardless of whether the output waveform is the saturated absorption line.

In the present invention, the threshold value definition defines at least one of the first and second threshold values to be a different threshold value for each saturated absorption line that is the determination target. Thereby, the appropriate first and second threshold values can be defined for each saturated absorption line that is the determination target, and the saturated absorption line can be identified still more appropriately.

The laser frequency stabilizing device of the present invention is a laser frequency stabilizing device in which a resonator length is changed and an oscillation frequency of laser light is stabilized to a specific saturated absorption line based on a saturated absorption line in a light output signal obtained by shining laser light on an absorption cell. The laser frequency stabilizing device includes a conversion device converting the laser light passing through the absorption cell into the light output signal; a generating device generating a second-order differential signal of the light output signal converted by the conversion device; an actuator changing the resonator length; and a control device controlling an operation of the actuator. The control device includes a threshold value definer, a waveform determiner, and an absorption line determiner. In the threshold value definer, a first threshold value and a second threshold value are defined based on an output value of the light output signal output from the conversion device. The first threshold value and the second threshold value are in a magnitude relationship. In the waveform determiner, an output value of the second-order differential signal is compared with the first threshold value and the second threshold value. Then, a determination is made as to whether the second-order differential signal following a change in the resonator length has an output waveform that displays a behavior in which the output waveform changes from less than the second threshold value to be equal to or greater than the first threshold value, and then changes to be less than the second threshold value. In the absorption line determiner, based on a determination result from the waveform determination, a determination is made as to whether the output waveform of the second-order differential signal is the saturated absorption line. The laser frequency stabilizing device of the present invention is a device executing the method for determining saturated absorption lines described above and therefore can enjoy similar effects and results.

### BRIEF DESCRIPTION OF THE DRAWINGS

The present invention is further described in the detailed description which follows, in reference to the noted plurality of drawings by way of non-limiting examples of exemplary embodiments of the present invention, in which like reference numerals represent similar parts throughout the several views of the drawings, and wherein:
Fig. 1 is a block diagram illustrating a laser frequency stabilizing device of the present embodiment;
Fig. 2 is a block diagram illustrating a control device of the present embodiment;
Fig. 3 is a flowchart describing a search process and a frequency locking process of the present embodiment;
Fig. 4 is a flowchart describing a method for determining saturated absorption lines of the present embodiment;
Figs. 5A to 5D describe definition of threshold values of the present embodiment;
Fig. 6 describes waveform determination of the present embodiment;
Fig. 7 is a block diagram illustrating a conventional laser frequency stabilizing device; and
Figs. 8A and 8B are views illustrating a light output signal and a second-order differential signal.

### DETAILED DESCRIPTION OF THE INVENTION

The particulars shown herein are by way of example and for purposes of illustrative discussion of the embodiments of the present invention only and are presented in the cause of providing what is believed to be the most useful and readily understood description of the principles and conceptual aspects of the present invention. In this regard, no attempt is made to show structural details of the present invention in more detail than is necessary for the fundamental understanding of the present invention, the description is taken with the drawings making apparent to those skilled in the art how the forms of the present invention may be embodied in practice.

Hereafter, an embodiment of the present invention is described with reference to the drawings.

### [Configuration of Laser Frequency Stabilizing Device]

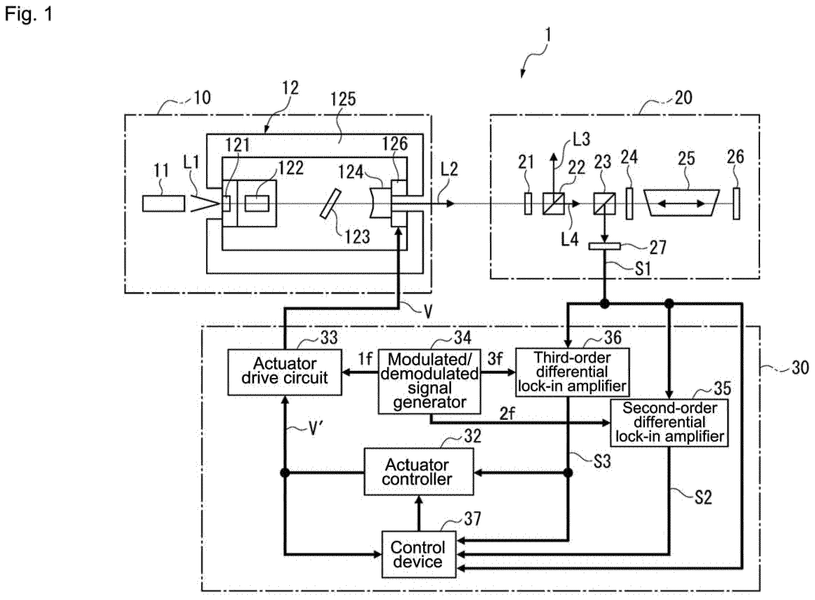

Fig. 1 is a block diagram illustrating a laser frequency stabilizing device 1 of the present embodiment. As shown in Fig. 1, the laser frequency stabilizing device 1 includes a laser generator 10, a laser light detector 20, and a drive controller 30, all of which are similar to those of a conventional laser frequency stabilizing device 100. Moreover, the laser frequency stabilizing device 1 of the present embodiment differs from the conventional laser frequency stabilizing device 100 by including a control device 37 that executes a search process and a frequency locking process and that identifies saturated absorption lines while discriminating whether noise is superimposed on a second-order differential signal S2 in each process. Therefore, hereafter, functions and structures which are similar to those of the conventional laser frequency stabilizer 100 are given the same reference numerals and descriptions thereof are omitted. The control device 37, which constitutes a major element of the present application, is described in detail hereafter.

### [Configuration of Control Device]

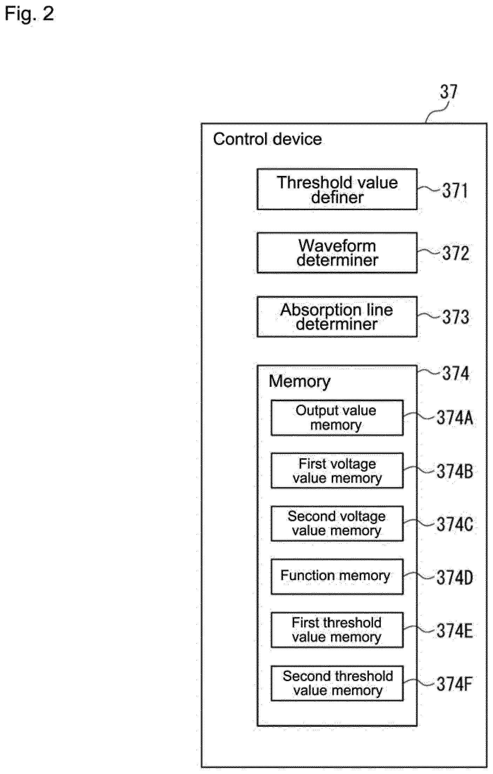

Fig. 2 is a block diagram illustrating the control device 37. The control device 37 includes a CPU (Central Processing Unit), a memory 374, and the like, and executes various processes according to programs stored in the memory 374. Moreover, descriptions of those functions of the control device 37 which are similar to functions of a conventional automatic lock device 31 are omitted. Hereafter, only a function identifying the saturated absorption lines, which constitutes a major element of the present application, is described. As shown in Fig. 2, the control device 37 includes a threshold value definer 371, a waveform determiner 372, an absorption line determiner 373, the memory 374, and the like.

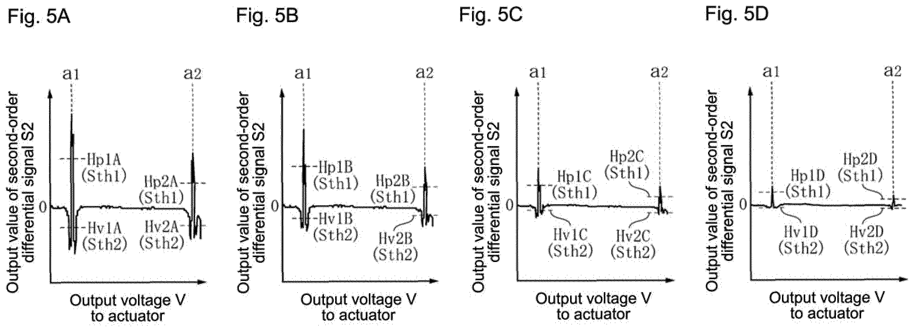

The threshold value definer 371 defines a first threshold value Sthl and a second threshold value Sth2 (see Figs. 5A to 6) based on an output value of a light output signal S1 output from a light detector 27. The first and second threshold values Sthl and Sth2 are in a magnitude relationship. The waveform determiner 372 compares an output value of the second-order differential signal S2 from a second-order differential lock-in amplifier 35 with the first and second threshold values Sthl and Sth2. Then, the waveform determiner 372 determines whether the second-order differential signal S2 following a change in an output voltage V (following a change in a resonator length) has an output waveform that displays a predetermined behavior (hereafter referred to as a first behavior). In addition, the absorption line determiner 373 determines whether the output waveform is a saturated absorption line based on a result of the determination by the waveform determiner 372.

### [Operations of the Laser Frequency Stabilizing Device]

Next, operations of the laser frequency stabilizing device 1 are described. Hereafter, overall operations (a search process and a frequency locking process) are described as the operations of the laser frequency stabilizing device 1, then a method for determining absorption lines is described. The method for determining absorption lines is executed during the search process and the frequency locking process.

### [Search Process and Frequency Locking Process]

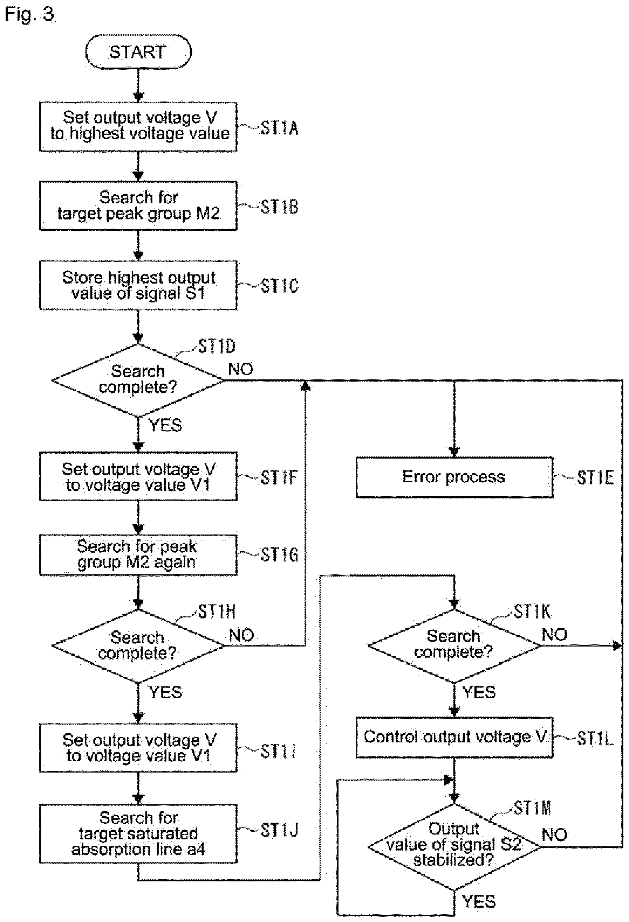

Fig. 3 is a flowchart describing the search process and the frequency locking process. Moreover, the search process and the frequency locking process in the present embodiment are substantially similar to a search process and a frequency locking process executed by the conventional laser frequency stabilizing device 100. Therefore, descriptions thereof are abbreviated hereafter. In addition, for ease of description, a saturated absorption line a4 (a saturated absorption line group and a peak group including the saturated absorption line a4 are N2 and M2, respectively) is used as a target saturated absorption line hereafter. First, the control device 37 controls an operation of an actuator drive circuit 33 to set the output voltage V applied to an actuator 126 to a highest voltage value (step ST1A).

After step ST1A, the control device 37 searches for the target peak group M2 while gradually reducing the output voltage V from the highest voltage value to a lowest voltage value (step ST1B). Specifically, in step ST1B, the control device 37 executes a process illustrated below. In other words, the control device 37 identifies the saturated absorption line using the method for determining saturated absorption lines (described hereafter), then stores the voltage value of the output voltage V that was applied to the actuator 126 when the saturated absorption line was observed in a first voltage value memory 374B in the memory 374 (Fig. 2). In addition, the control device 37 reads voltage values Vnew and Void from the first voltage value memory 374B, calculates a value for a difference between the voltage values Vnew and Vold, then compares the difference value to ΔV and ΔV'.

Herein, the voltage value Vnew is a voltage value for the output voltage V when the saturated absorption line is observed (when the newest observation is made). The voltage value Void is a voltage value for the output voltage V for an immediately preceding observation of the saturated absorption line. In addition, difference values Va1 to Va6 are difference values for each output voltage V between neighboring saturated absorption lines belonging to a saturated absorption line group. Difference values Vb1 to Vb6 are difference values for each output voltage V between neighboring saturated absorption line groups. When the difference values Va1 to Va6 have Va as the highest value (Fig. 8B), the difference values Vb1 to Vb6 have Vb as the lowest value and Vb' as the highest value (Fig. 8B), and difference values for each output voltage V between each peak group have Vc as the lowest value (Fig. 8A), ΔV and ΔV' are defined to fulfill a relationship where Va < ΔV <Vb and Vb' < ΔV' < Vc.

In other words, by comparing the difference value for the voltage values Vnew and Void with ΔV, the control device 37 discriminates whether the presently observed saturated absorption line belongs to an identical saturated absorption line group as a saturated absorption line observed immediately before. When (the difference value of the voltage values Vnew and Vold) < ΔV, the presently observed saturated absorption line belongs to an identical saturated absorption line group as the saturated absorption line observed immediately before. In addition, by comparing the difference value of the voltage values Vnew and Void with ΔV', the control device 37 discriminates whether the presently observed saturated absorption line belongs to an identical peak group as the saturated absorption line observed immediately before. When (the difference value of the voltage values Vnew and Vold) < ΔV', the presently observed saturated absorption line belongs to an identical peak group as the saturated absorption line observed immediately before.

Using the above-described discrimination, the control device 37 searches for the peak group M2, for which a number of included saturated absorption line groups is six (N1 to N6) and a number of saturated absorption lines belonging to each saturated absorption line group is, in order from the lowest output voltage V, one (a1), four (a2 to a5), four (a6 to a9), one (a10), four (a11 to a14), and one (a15).

When the output voltage V is reduced from the highest voltage value toward the lowest voltage value (during step ST1B), the control device 37 stores the highest output value (absolute value) for the light output signal S1 output from the light detector 27 in the output value memory 374A (Fig. 2) of the memory 374 (step ST1C). After step ST1C, the control device 37 determines whether the search for the peak group M2 in step ST1B is complete (step ST1D). When a "NO" determination is reached in step ST1D, the control device 37 executes an error process (step ST1E). Herein, examples of the error process include a process alerting a worker that an error has occurred by controlling illumination of an LED (Light Emitting Diode) or controlling an audio notification.

Meanwhile, when a "YES" determination is reached in step ST1D, the control device 37 sets the output voltage V to a voltage value VI (Figs. 8A and 8B) that is slightly higher than the voltage value at which the saturated absorption line a15 is observed in the saturated absorption line groups N1 to N6 included in the peak group M2 (step ST1F). After step ST1F, the control device 37 once again searches for the peak group M2, similar to step ST1B, while gradually reducing the output voltage V from the voltage value VI (step ST1G). Then, as a result of reducing the output voltage V, the control device 37 determines whether the search for the peak group M2 is complete (step ST1H). When a "NO" determination is reached in step ST1H, the control device 37 moves to the error process of step ST1E.

Meanwhile, when a "YES" determination is reached, similar to step ST1F, the control device 37 sets the output voltage V to the voltage value VI (step ST1I). After step ST1I, as illustrated below, the control device 37 searches for the target saturated absorption line a4 (step ST1J). First, while performing the identification of the saturated absorption line using the method for determining saturated absorption lines described hereafter as well as the above-described discrimination, the control device 37 reduces the output voltage V until the saturated absorption line group belonging to the first observed peak group is observed five times. Moreover, because the output voltage V is set to the voltage value VI in step ST1I, the first observed peak group is the peak group M2. The saturated absorption line groups belonging to the peak group M2 include the saturated absorption line group observed the first time (the saturated absorption line group N6) and the saturated absorption line group observed the fifth time (the saturated absorption line group N2).

Next, while performing the identification of the saturated absorption line using the method for determining saturated absorption lines described hereafter as well as the above-described discrimination, the control device 37 reduces the output voltage V until the saturated absorption line belonging to the saturated absorption line group N2, observed the fifth time, is observed twice. Moreover, the saturated absorption lines belonging to the saturated absorption line group N2 include the saturated absorption line observed the first time (the saturated absorption line a5) and the saturated absorption line observed the second time (the saturated absorption line a4). In addition, the control device 37 determines whether the search for the saturated absorption line a4 is complete as a result of reducing the output voltage V (step ST1K). When a "NO" determination is reached in step ST1K, the control device 37 moves to the error process of step ST1E.

Meanwhile, when a "YES" determination is reached in step ST1K, the control device 37 stops reduction of the output voltage V and controls the output voltage V such that the output value of the second-order differential signal S2 is the peak value for the saturated absorption line a4 (step ST1L). Then, using the process of step ST1L, the oscillation frequency of a laser light L2 matches the target saturated absorption line a4. After step ST1L, the control device 37 compares the output value of the second-order differential signal S2 from the second-order differential lock-in amplifier 35 with a voltage value Sth (Fig. 8B), then continuously monitors whether the output value of the second-order differential signal S2 stabilizes at equal to or greater than the voltage value Sth (step ST1M). Specifically, in the process of step ST1M, the control device 37 monitors whether the oscillation frequency of the laser light L2 stabilizes at the target saturated absorption line a4. In addition, when a "NO" determination is reached in step ST1M, the control device 37 moves to the error process of step ST1E.

### [Method for Determining Saturated Absorption Lines]

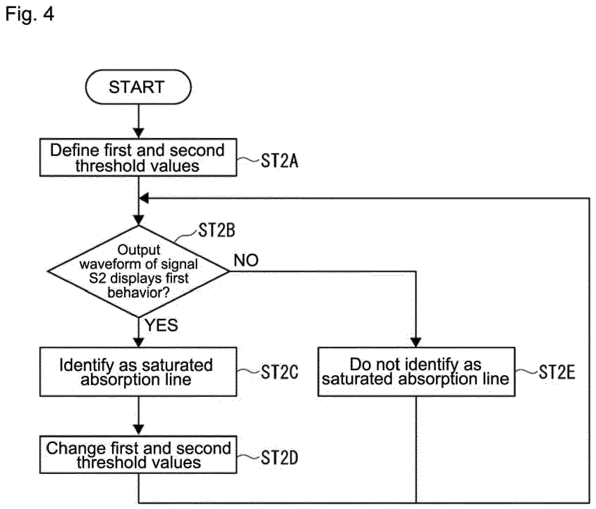

Fig. 4 is a flowchart describing the method for determining saturated absorption lines. Next, the method for determining saturated absorption lines executed in steps ST1B, ST1G, and ST1J is described at a stage where the saturated absorption lines are identified. First, as illustrated below, the threshold value definer 371 defines the first and second threshold values Sthl and Sth2, which are in a magnitude relationship (step ST2A: definition of threshold values).

Figs. 5A to 5D describe the definition of threshold values ST2A. Specifically, Figs. 5A to 5D illustrate an output waveform of the second-order differential signal S2 when changes are made to the output voltage V (when changes are made to the resonator length), where the output value of the second-order differential signal S2 is a vertical axis and the output voltage V is the horizontal axis. Moreover, for ease of description, Figs. 5A to 5D illustrate only the saturated absorption lines a1 and a2 as output waveforms of the second-order differential signal S2. In addition, Figs. 5A to 5D each illustrate the output waveform of the second-order differential signal S2 having a different highest output value stored in the output value memory 374A in step ST1B. Moreover, in Figs. 5A to 5D, a scale on the vertical axis is the same for all figures. Specifically, the output waveform shown in Fig. 5A is an output waveform where the highest output value (absolute value) stored in the output value memory 374A in step ST1B is an output value SA. Each of the output waveforms shown in Figs. 5B to 5D are output waveforms where the highest output value (absolute value) stored in the output value memory 374A in step ST1B is an output value SB to SD, respectively. Moreover, a relationship between each of the output values SA to SD is SA > SB > SC > SD.

For example, when the laser frequency stabilizing device 1 is used for an extended period of time and the laser power of a laser light L1 emitted from an excitation semiconductor laser 11 decreases, the output value (absolute value) of the light output signal S1 output from the light detector 27 also decreases. In addition, when the output value (absolute value) of the light output signal S1 decreases, as shown in Figs. 5A to 5D, the output value (absolute value) of the second-order differential signal S2 also decreases in response to the change in the output value (absolute value) of the light output signal S1. In addition, as shown in Fig. 5A, when the highest output value (absolute value) stored in the output value memory 374A is comparatively high, the threshold value definer 371 defines the first and second threshold values Sthl and Sth2 to have comparatively high absolute values. In addition, as shown in Figs. 5A to 5D, as the highest output value stored in the output value memory 374A decreases, the threshold value definer 371 defines the absolute values of the first and second threshold values Sthl and Sth2 lower. Moreover, as shown in Figs. 5A and 5D, the threshold value definer 371 defines the first and second threshold values Sthl and Sth2 to different threshold values for each saturated absorption line.

Herein, a first function specific to calculating the first threshold value Sthl and a second function specific to calculating the second threshold value Sth2 are pre-loaded in a function memory 374D. Moreover, the first and second functions are functions obtained as illustrated below, for example. First, the laser power of the laser light L1 emitted from the excitation semiconductor laser 11 is defined as PA. Then, the output voltage V is reduced from the highest voltage value to the lowest voltage value and, when the output voltage V has been reduced, the highest output value (output value SA) for the light output signal S 1 output from the light detector 27 is obtained. In addition, the laser power of the laser light L1 is defined in order as PB, PC, and PD (PA > PB > PC > PD) and, by performing a similar process to that described above, the highest output values (output values SB, SC, and SD) are obtained for each light output signal S1 where the laser power is PB, PC, and PD, respectively. Next, the highest output value (output values SA to SD) for the light output signal S1 when the laser power is defined as PA to PD, half the peak value (e.g., half values HplA to HplD (Figs. 5A to 5D)) of the output waveform of the second-order differential signal S2 for a specific saturated absorption line (e.g., the saturated absorption line a1) at each of the output values SA to SD, and half a valley value (e.g., half values Hv1A to HvlD (Figs. 5A to 5D)) of the output waveform of the second-order differential signal S2 for the specific saturated absorption line at each of the output values SA to SD are obtained.

Then, using the least squares method or the like, a function approximation is computed from a set of each of the obtained highest output values (e.g., the output values SA to SD) and the half values (e.g., the half values HplA to Hp1D). The function approximation is then taken as the first function for the specific saturated absorption line (e.g., the saturated absorption line a1). Similarly, using the least squares method or the like, the function approximation is computed from a set of each of the obtained highest output values (e.g., the output values SA to SD) and the half values (e.g., the half values Hv1A to Hv1D). The function approximation is then taken as the second function for the specific saturated absorption line (e.g., the saturated absorption line a1). Using the above method, the first and second functions are computed for all of the saturated absorption lines. For example, the first function for the saturated absorption line a2 is a function approximation computed using the least squares method from a set of each of the obtained highest output values (e.g., the output values SA to SD) and the half values (e.g., the half values Hp2A to Hp2D). The second function for the saturated absorption line a2 is an approximation function computed using the least squares method or the like from a set of each of the obtained highest output values (e.g., the output values SA to SD) and the half values (e.g., the half values Hv2A to Hv2D). Then, the first and second functions for each of the saturated absorption lines computed as described above are associated with the saturated absorption line and stored in the function memory 374D.

In step ST2A, the threshold value definer 371 reads the first and second functions from the function memory 374D, the first and second functions corresponding to the saturated absorption line that is the determination target. The threshold value definer 371 also reads the output values stored in the output value memory 374A. Then, the threshold value definer 371 computes the first and second threshold values Sthl and Sth2 corresponding to the read output values using the read first and second functions, then stores the first and second threshold values Sthl and Sth2 in a first threshold value memory 374E and a second threshold value memory 374F, respectively. For example, in a case where the saturated absorption line that is the determination target is the saturated absorption line a1 and the read output value is the output value SA, the threshold value definer 371 defines the first and second threshold values Sthl and Sth2 as half values HplA and Hv1A, respectively, by computing the first and second threshold values Sthl and Sth2 as described above.

After step ST2A, using the first and second threshold values Sthl and Sth2 defined in step ST2A, the waveform determiner 372 determines whether the output waveform of the second-order differential signal S2 output from the second-order differential lock-in amplifier 35 displays the first behavior, as illustrated below (step ST2B: waveform determination).

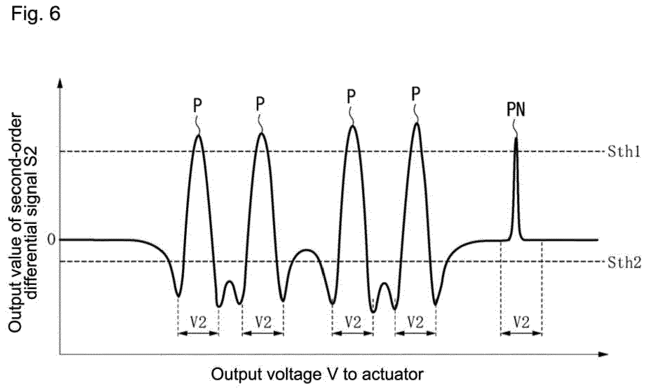

Fig. 6 describes the waveform determination in step ST2B. Specifically, Fig. 6 is a view schematically illustrating the output waveform of the second-order differential signal S2 when the output voltage V is changed (when the resonator length is changed), where the output value of the second-order differential signal S2 is the vertical axis and the output voltage V is the horizontal axis. In other words, the waveform determiner 372 compares the output value of the second-order differential signal S2 with the first and second threshold values Sthl and Sth2. The output value of the second-order differential signal S2 is input sequentially from the second-order differential lock-in amplifier 35 at a predetermined sampling interval. The first and second threshold values Sthl and Sth2 are stored in the first threshold value memory 374E and the second threshold value memory 374F, respectively. The waveform determiner 372 associates and then sequentially stores in a second voltage value memory 374C the inputted output value of the second-order differential signal S2, the voltage value of the output voltage V applied to the actuator 126 when the second-order differential signal S2 is input, and data corresponding to the comparison result.

Moreover, the data corresponding to the comparison result is data that the output value of the second-order differential signal S2 is less than the second threshold value Sth2, data that the output value of the second-order differential signal S2 is equal to or greater than the second threshold value Sth2 and less than the first threshold value Sth1, or data that the output value of the second-order differential signal S2 is equal to or greater than the first threshold value Sthl. In addition, when the output voltage V of the second-order differential signal S2 is changed only a predetermined value V2 (Fig. 6), the waveform determiner 372 determines whether the output waveform of the second-order differential signal S2 displays the first behavior based on the data stored in the second voltage value memory 374C. In the first behavior, the output waveform of the second-order differential signal S2 changes from less than the second threshold value Sth2 to be equal to or greater than the first threshold value Sth1, and then changes to be less than the second threshold value Sth2.

When a "YES" determination is reached in step ST2B, the absorption line determiner 373 identifies that the second-order differential signal S2 with the output waveform displaying the first behavior is the saturated absorption line (step ST2C: absorption line identification). For example, as shown in Fig. 6, the saturated line determiner 373 identifies that the second-order differential signal S2 (each peak P) with the output waveform displaying the first behavior within a range of the predetermined value V2 is the saturated absorption line. In addition, based on the data stored in the second voltage value memory 374C, the absorption line determiner 373 discriminates the peak value of the second-order differential signal S2 with the output waveform displaying the first behavior (the output value of the second-order differential signal S2), then stores the voltage value of the output voltage V associated with that peak value in the first voltage value memory 374B. The voltage value of the output voltage V associated with the peak value is stored as the voltage value for the output voltage V when the saturated absorption line is observed.

After step ST2C, the threshold value definer 371 changes the first and second threshold values Sthl and Sth2, which are stored in the first threshold value memory 374E and the second threshold value memory 374F, respectively (step ST2D: threshold value definition). In other words, because the saturated absorption line that is the determination target changes, the threshold value definer 371 computes the first and second threshold values Sthl and Sth2 corresponding to the output values stored in the output value memory 374A using the first and second functions corresponding to the saturated absorption line that is the determination target, similar to step ST2A described above. The threshold value definer 371 then refreshes the first and second threshold values Sthl and Sth2 stored in the first threshold value memory 374E and the second threshold value memory 374F, respectively, for the computed first and second threshold values Sthl and Sth2. After step ST2D, the control device 37 once again executes the process of step ST2B using the changed first and second threshold values Sthl and Sth2.

Meanwhile, when a "NO" determination is reached in step ST2B, the absorption line determiner 373 identifies that the second-order differential signal S2 with the output waveform displaying the first behavior is not the saturated absorption line (step ST2E: absorption line determination). For example, as shown in Fig. 6, the absorption line determiner 373 identifies that the second-order differential signal S2 with the output waveform not displaying the first behavior within the range of the predetermined value V2 (peak PN) is not the saturated absorption line, but rather a signal superimposed with noise. After step ST2E, the control device 37 does not execute the process of step ST2D and instead executes the process of step ST2B once again.

Following are the results of the present embodiment described above. Taking particular note of the point that "a signal recognized as the saturated absorption line occurs when the second-order differential signal S2 following a change in the output voltage V has the output waveform that displays the first behavior," in the present embodiment, a determination is made as to whether the output waveform displaying the first behavior is the saturated absorption line using the processes of steps ST2A to ST2E. Thereby, a determination can be made as to whether noise is superimposed on the second-order differential signal S2 and the saturated absorption line can be favorably identified. In particular, by determining whether the output waveform displaying the first behavior is the saturated absorption line using the processes of steps ST2A to ST2E, in the present embodiment, the saturated absorption line will never be misidentified as a saturated absorption line (typically not observed) between the peak groups M1 to M4, as well as between the saturated absorption line groups belonging to the same peak group, and between the saturated absorption lines belonging to the same saturated absorption line group. Accordingly, the oscillation frequency of the laser light L2 can be favorably matched to the target saturated absorption line a4.

When the first and second threshold values Sthl and Sth2 are defined so as to be uniform regardless of changes in the laser power for the laser light L1 emitted from the excitation semiconductor laser 11, the following circumstance may arise. First, the output waveform of the second-order differential signal S2 identified as the saturated absorption line (the output waveform displaying the first behavior) is postulated. For a case where the desired laser power is achieved, the output waveform is identified as the saturated absorption line using the steps ST2B and ST2C described above. In a case where the laser power is lower than the desired laser power, as shown in Figs. 5A to 5D, the output value (absolute value) of the second order differential signal S2 is also lower. Therefore, the peak values and valley values in the postulated output waveform of the second-order differential signal S2 may be values in a range equal to or greater than the second threshold value Sth2 and less than the first threshold value Sthl. In other words, the postulated output waveform of the second-order differential signal S2 may not display the first behavior and the output waveform may not be identified as the saturated absorption line, but rather as noise superimposed on the second-order differential signal S2, regardless of whether the postulated output waveform of the second-order differential signal S2 is the saturated absorption line.

In addition, the method for determining saturated absorption lines includes the threshold value definition in steps ST2A and ST2D. Therefore, based on the output value of the light output signal S1 (i.e., based on changes in the laser power due to use of the laser frequency stabilizing device 1), the appropriate first and second threshold values Sthl and Sth2 can be defined using the threshold definition in steps ST2A and ST2D. Accordingly, the first and second threshold values Sthl and Sth2 that were defined in the threshold value definition in steps ST2A and ST2D are used in the waveform determination in step ST2B. Thereby, the saturated absorption line can be appropriately identified.

Herein, the threshold definition in steps ST2A and ST2D defines the first and second threshold values Sthl and Sth2 based on the highest output value (absolute value) of the light output signal S1 output from the light detector 27 when the output voltage V is reduced from the highest voltage value to the lowest voltage value. In other words, the first and second threshold values Sthl and Sth2 are defined based on the highest output value (absolute value) of the light output signal S1 where the light output signal S1 output from the light detector 27 is at its most stable. Thereby, changes in the laser power can be favorably recognized and the appropriate first and second threshold values Sthl and Sth2 corresponding to the laser power can be defined.

Moreover, the threshold value definition in steps ST2A and ST2D defines the absolute values of the first and second threshold values Sthl and Sth2 lower as the highest output value (absolute value) stored in the output value memory 374A lowers. Thereby, when the highest output value (absolute value) of the light output signal S1 lowers, the output value (absolute value) of the second-order differential signal S2 also lowers. Therefore, by defining the first and second threshold values Sthl and Sth2 in the threshold value definition in steps ST2A and ST2D as described above, the result is that the postulated output waveform of the second-order differential signal S2 also reliably displays the first behavior. Accordingly, in the waveform determination in step ST2B, by using the first and second threshold values Sthl and Sth2 defined in the threshold value definition in steps ST2A and ST2D, the saturated absorption lines can be more appropriately identified. The threshold value definition in steps ST2A and ST2D define the first and second threshold values Sthl and Sth2 to different threshold values for each saturated absorption line that is the determination target. Thereby, the appropriate first and second threshold values Sthl and Sth2 can be defined for each saturated absorption line that is the determination target, and the saturated absorption lines can be identified even more appropriately.

An applied voltage/stroke characteristic of the actuator 126 is hysteretic. Specifically, in steps ST1B, ST1G, and ST1J, even when the changes in the output voltage V are not uniform, a search is conducted for the saturated absorption line while increasing the output voltage V in steps ST1B and ST1G and a search is conducted for the saturated absorption line while decreasing the output voltage V in step ST1J, for example. In such a case, due to the influence of hysteresis, a search for a desired saturated absorption line may be impossible. In the present embodiment, in steps ST1B, ST1G, and ST1J, changes in the output voltage V are uniform and a search is conducted for the saturated absorption lines while decreasing the output voltage V. Thereby, a search for the desired saturated absorption lines can be conducted without suffering any influence from hysteresis.

Moreover, the present invention is not limited to the above embodiment and may include modifications and improvements within a range capable of achieving the object of the present invention. In the present embodiment, the threshold value definition in steps ST2A and ST2D defined both the first and second threshold values Sthl and Sth2 to different threshold values for each output value stored in the output value memory 374A and for each saturated absorption line that is the determination target. However, the present invention is not limited to this. For example, either one of the first and second threshold values Sthl and Sth2 may be defined uniformly and the other threshold value may be defined to a different threshold value for each output value stored in the output value memory 374A and for each saturated absorption line that is the determination target. In addition, the present invention may be configured such that, for example, the first and second threshold values Sthl and Sth2 change when the output value stored in the output value memory 374A changes, and such that the same first and second threshold values Sthl and Sth2 are defined even when the saturated absorption line that is the determination target changes. In the present embodiment, in steps ST1B, ST1G, and ST1J, a search for the saturated absorption line was conducted while decreasing the output voltage V. However, when changes in the output voltage V are uniform, the present invention is not limited to this, and the search for the saturated absorption line and the like may be conducted while increasing the output voltage V.

The present invention can be used in a laser frequency stabilizing device in which a resonator length is changed and an oscillation frequency of laser light is stabilized to a specific saturated absorption line based on a saturated absorption line in a light output signal obtained by shining laser light on an absorption cell.

## Claims

1. A method for determining saturated absorption lines for a laser frequency stabilizing device (1), wherein a resonator length is changed and an oscillation frequency of laser light is stabilized to a specific saturated absorption line based on a saturated absorption line in a light output signal (S1) obtained by shining laser light on an absorption cell (25), the method comprising:
defining a first threshold value (Sth1) and a second threshold value (Sth2) based on an output value of the light output signal (S1), the first threshold value and the second threshold value being in a magnitude relationship;
comparing an output value of a second-order differential signal (S2) of the light output signal with the first threshold value (Sth1) and the second threshold value (Sth2), then determining whether the second-order differential signal following a change in the resonator length has an output waveform displaying a behavior in which the output waveform changes from less than the second threshold value to be equal to or greater than the first threshold value (Sth1), and then changes to be less than the second threshold value (Sth2); and
determining whether the output waveform of the second-order differential signal (S2) is the saturated absorption line based on a result of said comparing by differentiating between an absorption line and a peak due to noise.

2. The method for determining saturated absorption lines according to claim 1, wherein said defining defines the absolute value for at least one of the first and second threshold values to decrease as the absolute value for the output value of the light output signal (S1) decreases.

3. The method for determining saturated absorption lines according claim 1, wherein said defining defines at least one of the first and second threshold values to be a different threshold value for each saturated absorption line that is a determination target.

4. The method for determining saturated absorption lines according claim 2, wherein said defining defines at least one of the first and second threshold values to be a different threshold value for each saturated absorption line that is a determination target.

5. A laser frequency stabilizing device (1), wherein a resonator length is changed and an oscillation frequency of laser light is stabilized to a specific saturated absorption line based on a saturated absorption line in a light output signal obtained by shining laser light on an absorption cell (25), the laser frequency stabilizing device comprising:
a converter configured to convert the laser light passing through the absorption cell (25) into the light output signal (S1);
a generator configured to generate a second-order differential signal of the light output signal converted by the converter;
an actuator (126) configured to change the resonator length; and
a controller (30) configured to control an operation of the actuator, the controller comprising:
a threshold value definer (371) configured to define a first threshold value (Sth1) and a second threshold value (Sth2) based on an output value of the light output signal (S1) output from the converter, the first threshold value and the second threshold value being in a magnitude relationship;
a waveform determiner (372) configured to compare an output value of the second-order differential signal (52) with the first threshold value (Sth1) and the second threshold value (Sth2), then determining whether the second-order differential signal (S2) following a change in the resonator length has an output waveform that displays a behavior in which the output waveform changes from less than the second threshold value (Sth2) to be equal to or greater than the first threshold value (Sth1), and then changes to be less than the second threshold value (Sth2); and
an absorption line determiner (373) configured to determine whether the output waveform of the second-order differential signal is the saturated absorption line based on a determination result from the waveform determination by differentiating between an absorption line and a peak due to noise.

## Patentansprüche

1. Verfahren zum Bestimmen von gesättigten Absorptionslinien für eine Stabilisierungsvorrichtung (1) für eine Laserfrequenz, wobei eine Resonatorlänge verändert wird und eine Oszillationsfrequenz von Laserlicht auf eine spezifische gesättigte Absorptionslinie auf Grundlage einer gesättigten Absorptionslinie in einem Lichtausgabesignal (S1), das durch das Scheinen von Laserlicht auf eine Absorptionszelle (25) erhalten wird, stabilisiert wird, wobei das Verfahren Folgendes umfasst:
Definieren eines ersten Schwellenwertes (Sth1) und eines zweiten Schwellenwertes (Sth2) auf Grundlage eines Ausgabewertes des Lichtausgabesignals (S1), wobei der erste Schwellenwert und der zweite Schwellenwert in einem Größenverhältnis stehen;
Vergleichen eines Ausgabewertes eines Differentialsignals zweiter Klasse (S2) des Lichtausgabesignals mit dem ersten Schwellenwert (Sth1) und dem zweiten Schwellenwert (Sth2), dann Bestimmen, ob das Differentialsignal zweiter Klasse, das einer Veränderung in der Resonatorlänge folgt, eine Ausgabewellenlänge aufweist, die ein Verhalten anzeigt, in dem sich die Ausgabewellenlänge von weniger als dem zweiten Schwellenwert verändert, um wenigstens dem ersten Schwellenwert (Sth1) zu entsprechen, und sich dann verändert, um weniger als der zweite Schwellenwert (Sth2) zu sein; und
Bestimmen, ob die Ausgabewellenlänge des Differentialsignals zweiter Klasse (S2) die gesättigte Absorptionslinie ist, auf Grundlage eines Ergebnisses des Vergleichens durch Differenzieren zwischen einer Absorptionslinie und einer Spitze aufgrund von Rauschen.

2. Verfahren zum Bestimmen von gesättigten Absorptionslinien nach Anspruch 1, wobei das Definieren den absoluten Wert für den ersten und/oder den zweiten Schwellenwert definiert, abzunehmen, wenn der absolute Wert für den Ausgabewert des Lichtausgabesignals (S1) abnimmt.

3. Verfahren zum Bestimmen von gesättigten Absorptionslinien nach Anspruch 1, wobei das Definieren den ersten und/oder den zweiten Schwellenwert definiert, für jede gesättigte Absorptionslinie, die ein Bestimmungsziel ist, ein unterschiedlicher Schwellenwert zu sein.

4. Verfahren zum Bestimmen von gesättigten Absorptionslinien nach Anspruch 2, wobei das Definieren den ersten und/oder den zweiten Schwellenwert definiert, für jede gesättigte Absorptionslinie, die ein Bestimmungsziel ist, ein unterschiedlicher Schwellenwert zu sein.

5. Stabilisierungsvorrichtung (1) für eine Laserfrequenz, wobei eine Resonatorlänge verändert wird und eine Oszillationsfrequenz von Laserlicht auf eine spezifische gesättigte Absorptionslinie auf Grundlage einer gesättigten Absorptionslinie in einem Lichtausgabesignal, das durch das Scheinen von Laserlicht auf eine Absorptionszelle (25) erhalten wird, stabilisiert wird, wobei die Stabilisierungsvorrichtung für eine Laserfrequenz Folgendes umfasst:
einen Wandler, der konfiguriert ist, das Laserlicht, das durch die Absorptionszelle (25) verläuft, in das Lichtausgabesignal (S1) umzuwandeln;
einen Generator, der konfiguriert ist, ein Differentialsignal zweiter Klasse des durch den Wandler umgewandelten Lichtausgabesignals zu erzeugen;
einen Aktuator (126), der konfiguriert ist, die Resonatorlänge zu verändern; und
eine Steuervorrichtung (30), die konfiguriert ist, einen Betrieb des Aktuators zu steuern, wobei die Steuervorrichtung Folgendes umfasst:
einen Definierer (371) für einen Schwellenwert, der konfiguriert ist, einen ersten Schwellenwert (Sth1) und einen zweiten Schwellenwert (Sth2) auf Grundlage eines Ausgabewertes des Lichtausgabesignals (S1) zu definieren, das von dem Wandler ausgegeben wird, wobei der erste Schwellenwert und der zweite Schwellenwert in einem Größenverhältnis stehen;
einen Wellenformenbestimmer (372), der zu Folgendem konfiguriert ist:
Vergleichen eines Ausgabewertes eines Differentialsignals zweiter Klasse (52) mit dem ersten Schwellenwert (Sth1) und dem zweiten Schwellenwert (Sth2), dann Bestimmen, ob das Differentialsignal zweiter Klasse (S2), das einer Veränderung in der Resonatorlänge folgt, eine Ausgabewellenform aufweist, die ein Verhalten anzeigt, in dem sich die Ausgabewellenform von weniger als dem zweiten Schwellenwert (Sth2) verändert, um wenigstens dem ersten Schwellenwert (Sth1) zu entsprechen, und sich dann verändert, um weniger als der zweite Schwellenwert (Sth2) zu sein; und
einen Absorptionslinienbestimmer (373), der konfiguriert ist, zu bestimmen, ob die Ausgabenwellenform des Differentialsignals zweiter Klasse die gesättigte Absorptionslinie ist, auf Grundlage eines Bestimmungsergebnisses der Wellenformbestimmung durch Differenzieren zwischen einer Absorptionslinie und einer Spitze aufgrund von Rauschen.

## Revendications

1. Procédé de détermination de lignes d'absorption saturées destiné à un dispositif de stabilisation de fréquence laser (1), dans lequel une longueur de résonateur est changée et une fréquence d'oscillation d'une lumière laser est stabilisée sur une ligne d'absorption saturée spécifique en fonction d'une ligne d'absorption saturée dans un signal de sortie de lumière (S1) obtenu en exposant une cellule d'absorption (25) à une lumière laser, le procédé comprenant les étapes suivantes :
définir une première valeur de seuil (Sth1) et une seconde valeur de seuil (Sth2) en fonction d'une valeur de sortie du signal de sortie de lumière (S1), la première valeur de seuil et la seconde valeur de seuil étant dans une relation d'amplitude ;
comparer une valeur de sortie d'un signal différentiel de second ordre (S2) du signal de sortie de lumière à la première valeur de seuil (Sth1) et à la seconde valeur de seuil (Sth2), puis déterminer si le signal différentiel de second ordre, suite à un changement de la longueur de résonateur, a ou non une forme d'onde de sortie démontrant un comportement dans lequel la forme d'onde de sortie passe d'une forme d'onde inférieure à la seconde valeur de seuil à une forme d'onde supérieure ou égale à la première valeur de seuil (Sth1), puis change pour être inférieure à la seconde valeur de seuil (Sth2) ; et
déterminer si la forme d'onde de sortie du signal différentiel de second ordre (S2) est ou non la ligne d'absorption saturée en fonction d'un résultat de ladite comparaison en différentiant une ligne d'absorption d'un pic dû au bruit.

2. Procédé de détermination de lignes d'absorption saturées selon la revendication 1, dans lequel ladite définition définit la valeur absolue d'au moins une valeur parmi les première et seconde valeurs de seuil devant diminuer à mesure que la valeur absolue de la valeur de sortie du signal de sortie de lumière (S1) diminue.

3. Procédé de détermination de lignes d'absorption saturées selon la revendication 1, dans lequel ladite définition définit au moins une valeur parmi les première et seconde valeurs de seuil comme étant une valeur de seuil différente pour chaque ligne d'absorption saturée qui est une cible de détermination.

4. Procédé de détermination de lignes d'absorption saturées selon la revendication 2, dans lequel ladite définition définit au moins une valeur parmi les première et seconde valeurs de seuil comme étant une valeur de seuil différente pour chaque ligne d'absorption saturée qui est une cible de détermination.

5. Dispositif de stabilisation de fréquence laser (1), dans lequel une longueur de résonateur est changée et une fréquence d'oscillation d'une lumière laser est stabilisée sur une ligne d'absorption saturée spécifique en fonction d'une ligne d'absorption saturée dans un signal de sortie de lumière obtenu en exposant une cellule d'absorption (25) à une lumière laser, le dispositif de stabilisation de fréquence laser comprenant :
un convertisseur configuré pour convertir la lumière laser traversant la cellule d'absorption (25) en un signal de sortie de lumière (S1) ;
un générateur configuré pour générer un signal différentiel de second ordre du signal de sortie de lumière converti par le convertisseur ;
un actionneur (126) configuré pour changer la longueur de résonateur ; et
un contrôleur (30) configuré pour contrôler un fonctionnement de l'actionneur, le contrôleur comprenant :
un dispositif de définition de valeur de seuil (371) configuré pour définir une première valeur de seuil (Sth1) et une seconde valeur de seuil (Sth2) en fonction d'une valeur de sortie du signal de sortie de lumière (S1) sortant du convertisseur, la première valeur de seuil et la seconde valeur de seuil étant dans une relation d'amplitude ;
un dispositif de détermination de forme d'onde (372) configuré pour comparer une valeur de sortie du signal différentiel de second ordre (S2) à la première valeur de seuil (Sth1) et à la seconde valeur de seuil (Sth2), puis déterminer si le signal différentiel de second ordre (S2), suite à un changement de la longueur de résonateur, a ou non une forme d'onde de sortie démontrant un comportement dans lequel la forme d'onde de sortie passe d'une forme d'onde inférieure à la seconde valeur de seuil (Sth2) à une forme d'onde supérieure ou égale à la première valeur de seuil (Sth1), puis change pour être inférieure à la seconde valeur de seuil (Sth2) ; et
un dispositif de détermination de ligne d'absorption (373) configuré pour déterminer si la forme d'onde de sortie du signal différentiel de second ordre est ou non la ligne d'absorption saturée en fonction d'un résultat de détermination de la détermination de forme d'onde en différenciant une ligne d'absorption d'un pic dû au bruit.
